# EUROPÄISCHE PATENTANMELDUNG

(11) **EP 0 761 107 A1**
(43) Veröffentlichungstag der Anmeldung: **12.03.1997**
(21) Anmeldenummer: 96112591.1
(22) Anmeldetag: 03.08.1996
(51) Int. Cl.: A24C 5/60, B23K 26/06

(54) **Vorrichtung zum Perforieren von Artikeln der tabakverarbeitenden Industrie**

(30) Priorität: 17.08.1995 DE 19530216
(71) Anmelder: Hauni Maschinenbau Aktiengesellschaft, D-21033 Hamburg (DE)
(72) Erfinder: Pinck, Peter, 21033 Hamburg (DE)

(57) **Zusammenfassung**

Es wird eine Vorrichtung zum Perforieren von stabförmigen Artikeln der tabakverarbeitenden Industrie mit Laserstrahlung beschrieben. Eine Strahlungsquelle (16) gibt wenigstens zwei Strahlen (19,21) ab. Die Strahlen werden durch Strahlführungsmittel (23) zu einem Doppelstrahl vereint, der durch einen Strahlteiler (27) in zwei Doppelstrahlen aufgeteilt wird. Die beiden Doppelstrahlen werden zu Strahlungsköpfen (11,12) geleitet, welche sie zu den Perforationszonen (2,3) eines Artikels (1) ausrichten und mittels Optiken (8,9) auf die Umhüllung der Artikel (1) fokussieren. Jeder Doppelstrahl enthält einen Teilstrahl von jedem Laser der Strahlungsquelle (16).

Der Vorteil besteht darin, daß in benachbarten Perforationszonen (2,3) weitgehend übereinstimmende Perforationen entstehen, die dadurch erzeugte Luftdurchlässigkeit der Hülle ist feinfühlig steuerbar. Es können verschiedene Perforationsmuster hergestellt werden.

## Beschreibung

Die Erfindung betrifft eine Vorrichtung zum Herstellen einer Zone gewünschter Luftdurchlässigkeit im Hüllmaterial stabförmiger Artikel der tabakverarbeitenden Industrie nach dem Oberbegriff des Anspruchs 1.

Unter stabförmigen Artikeln der tabakverarbeitenden Industrie sollen im hier vorliegenden Zusammenhang alle die Artikel verstanden werden, die im Zuge ihrer Herstellung oder hinterher mit einer Perforation versehen werden. Das sind in erster Linie Filterzigaretten, können aber auch Plain-Zigaretten, andere stabförmige Rauchartikel oder Filterstäbe sein. Unter Hüllmaterial sind Streifen zum Umhüllen von Tabaksträngen oder Filtersträngen, Belagpapierstreifen, Belagpapierblättchen usw. zu verstehen, die als Materialbahn, als gebrauchsfertige Abschnitte oder als Hülle der Artikel perforiert werden können.

Durch die Perforation des Hüllmaterials von Zigaretten oder ähnlichen rauchbaren Artikeln entsteht in deren Umhüllung eine Zone gewünschter Luftdurchlässigkeit, durch welche der Raucher beim Rauchen Nebenluft ansaugt. Dadurch werden die Anteile von Nikotin und Kondensat im Rauch beeinflußt. Für die Perforation des Hüllmaterials kann ein Laser eingesetzt werden, dessen Strahlung mit optischen Strahlführungsmitteln in die jeweiligen Perforationszonen gelenkt wird und dort die gewünschten Löcher in das Hüllmaterial einbringt.

Beschrieben ist dies prinzipiell in der DE 27 51 522 A1 (≙ US 4 121 595). Die Perforation des Hüllmaterials mittels der kohärenten Strahlung eines Lasers führt zu einer sehr exakt bestimmbaren Zone gewünschter Luftdurchlässigkeit. Auf modernen Produktionsmaschinen werden im Zuge der Zigarettenproduktion zunächst Doppelzigaretten hergestellt, die im weiteren Verlauf zu Einzelzigaretten zerschnitten werden. Dabei ist es zweckmäßig, den die einzelnen Tabakstäbe mit dem Filterabschnitt verbindenden Belagpapierstreifen oder die verbundenen Doppelzigaretten in zwei Perforationszonen zu perforieren. Da gewöhnlich jede Perforationszone nebeneinander wenigstens zwei Perforationsspuren oder Lochreihen aufweist, wird die von dem Laser ausgehende Strahlung mit Strahlteilern in die benötigte Anzahl von Teilstrahlen geteilt, wie das beispielsweise in der DE 31 14 603 A1 (≙ US 4 469 111) für die Perforation von Streifenmaterial beschrieben ist. Die DE 27 54 104 C2 (≙ US 4 265 254) zeigt, wie mittels einer geschickten Strahlführung und eines in verschiedene Positionen bewegbaren Schwingspiegels mit einem Laser in zwei Perforationszonen jeweils zwei Lochreihen erzeugt werden können. Dies ist allerdings eine etwas heikle Strahlführung, weil die exakte Bewegung und Ausrichtung des Schwingspiegels im benötigten Takt nur schwer zu beherrschen ist. Eine weitere Methode, in zwei Perforationszonen einer laufenden Materialbahn jeweils mehrere Lochreihen einzubringen, zeigt die DE 33 21 800 C2 (≙ US 4 889 140). Dort ist ein Laser beschrieben, der zwei Nutzstrahlen abgibt, die separat in zwei Perforationszonen geführt und in mehrere Teilstrahlen aufgeteilt werden. Jeder Teilstrahl erzeugt auf einem laufenden Materialstreifen in der betreffenden Perforationszone eine Perforationsspur. Bei dieser Vorrichtung können nur alle Teilstrahlen gemeinsam beeinflußt werden, so daß eine sehr feinfühlige Änderung der Luftdurchlässigkeit des Hüllmaterials und die freie Variation des Perforationsmusters kaum möglich sind. Außerdem kann die separate Führung der Strahlen in den Perforationszonen zu unterschiedlichen Perforationsergebnissen führen. Das Erzeugen von je einer Perforationsspur oder Lochreihe in zwei Perforationszonen ist auch aus der DE 27 51 522 (≙ US 4 281 670) bekannt. Hiernach kann jeweils ein separater Laser zum Erzeugen einer Lochreihe eingesetzt werden. Mehrere parallele Lochreihen oder Perforationsspuren in einer Perforationszone erzeugt diese bekannte Anordnung allerdings nicht. Da im Hinblick auf das Ergebnis der Aufwand für diese bekannte Vorrichtung sehr hoch ist, wurde sie nicht realisiert. Durch die DE 34 18 188 C2 (≙ US 5 060 668) ist es schließlich bekannt, einen Laserstrahl in zwei Teilstrahlen aufzuteilen, die Teilstrahlen zu zwei Perforationszonen hin auszurichten und mittels Speziallinsen noch einmal in je zwei Teilstrahlen aufzusplitten, um in jeder Perforationszone zwei Spuren oder Lochreihen zu erzeugen. Die dafür erforderlichen Speziallinsen sind kompliziert und aufwendig. Ihre reproduzierbare Herstellung und ihr Einsatz in der Praxis dürften schwer zu beherrschen sein. Eine separate Beeinflussung wenigstens einiger Teilstrahlen ist dabei ausgeschlossen. Unterschiede in der Strahlführung und in den Linsen können in den beiden Perforationszonen zu unterschiedlichen Perforationsergebnissen und verschiedenen Luftdurchlässigkeiten der Hülle führen.

Der Erfindung liegt die Aufgabe zugrunde, eine weitere Vorrichtung der eingangs beschriebenen Art anzugeben.

Gelöst wird diese Aufgabe erfindungsgemäß mit den kennzeichnenden Merkmalen des Anspruchs 1. Damit ist es möglich, zwei oder mehr Strahlen separat zu beeinflussen und die Luftdurchlässigkeit des Hüllmaterials sehr feinfühlig auf gewünschte Werte einzustellen. Außerdem ist es möglich, in den Perforationszonen unterschiedliche Perforationsmuster zu erzeugen. Die Bildung von Doppel- oder Mehrfachstrahlen nach dem Anspruch 2 und die gemeinsame Nutzung jeweils nur einer Optik für die Strahlen eines Mehrfachstrahls führen zu einem einfachen und relativ unkomplizierten Aufbau der Vorrichtung und zu weitgehend konstanten Verhältnissen in der Perforationszone. Die Merkmale des Anspruchs 3 erlauben die Erzeugung von zwei oder mehr Perforationsspuren oder Lochreihen in mehrere Perforationszonen. Auch hier ist es möglich, die Strahlen eines Mehrfachstrahls separat zu beeinflussen. Die Zusammenfassung der Teilstrahlen in den Mehrfachstrahlen in der angegebenen Weise führt in allen Perforationszonen zu weitgehend gleichen Perforationsergebnissen. Dabei können sehr frei verschiedene Perforationsmuster gewählt werden. In den Ansprüchen 4 und 5 sind vorteilhafte Merkmale der Strahlführungsmittel enthalten. Die Ansprüche 6 bis 9 geben Merkmale bevorzugter Strahlungsquellen an. Dabei ist nach den Ansprüchen 6 und 7 in derzeit bevorzugter Weise der Einsatz zweier Laser als Strahlungsquelle vorgesehen. Dies ist insbesondere in modernen Hochleistungsmaschinen vorteilhaft, in denen in mehreren Förderbahnen gleichzeitig die Artikel in schneller Folge mit definierten Perforationen versehen werden müssen. Beim Einsatz eines Dauerstrichlasers als Strahlungsquelle entsprechend den Merkmalen der Ansprüche 10 und 11 werden separat steuerbare Pulserzeugungsmittel eingesetzt, um die durch Teilung aus der Laserstrahlung erzeugten Teilstrahlen den Anforderungen entsprechend zu pulsen und die Perforation des Hüllmaterials zu beeinflussen. In Weiterbildung der Erfindung enthalten die Ansprüche 12 und 13 die Integration der Vorrichtung in bestimmte Maschinen zur Zigarettenherstellung, wobei insbesondere die Perforation in zwei unterschiedlichen Förderwegen für moderne Maschinen hoher Leistung von Vorteil ist.

Die Erfindung bietet den Vorteil einer leistungsstarken Vorrichtung zum Herstellen von Zonen gewünschter Luftdurchlässigkeit im Hüllmaterial stabförmiger Artikel der tabakverarbeitenden Industrie. Die Bildung von Doppel- oder Mehrfachstrahlen durch Zusammenfassung von wenigstens zwei Strahlungen einer Strahlungsquelle ermöglicht die seaparate Beeinflussung der entstehenden Perforationsspuren oder Lochreihen. Dabei ergibt sich in vorteilhafter Weise die freie Wahl von unterschiedlichen Perforationsmustern durch die separate Beeinflussung der Pulsfolgen der verschiedenen Teilstrahlen. Werden Perforationen in mehreren Perforationszonen erzeugt, so führt die erfindungsgemäß vorgeschlagene Verwendung von Doppel- oder Mehrfachstrahlen in allen Perforationszonen zu weitgehend übereinstimmenden Perforationsmustern.

Die Erfindung wird nun anhand der Zeichnung näher erläutert.

Es zeigen
- Figur 1: eine schematische Darstellung eines ersten Ausführungsbeispiels der Vorrichtung nach der Erfindung,
- Figur 2: ein zweites Ausführungsbeispiel dar Erfindung,
- Figuren 3a - c: verschiedene Beispiele von Perforationsmustern und
- Figur 4: ein drittes Ausführungsbeispiel der Erfindung.

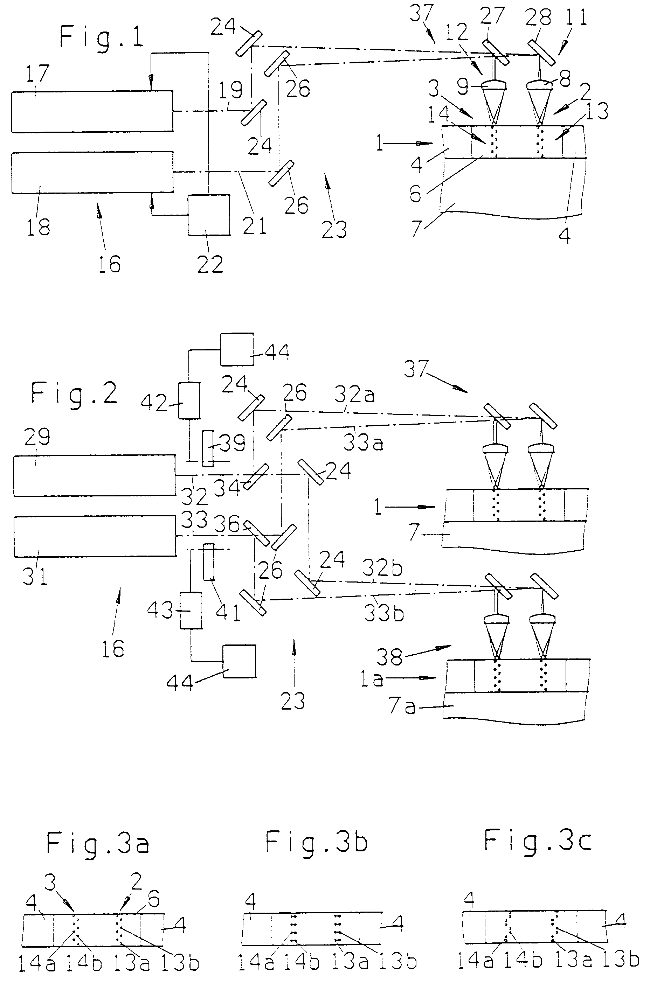

In Figur 1 ist ein Ausführungsbeispiel der Vorrichtung nach der Erfindung schematisch dargestellt. Eine zu perforierende Zigarette ist mit 1 bezeichnet. Es handelt sich um eine Doppelzigarette, von welcher nur der mittlere Teil mit den Perforationszonen 2 und 3 zu sehen ist. Derartige Doppelzigaretten werden bekanntlich gebildet, indem zwischen zwei axial fluchtenden Tabakstäben ein doppelt langer Filterabschnitt eingesetzt wird und diese Gruppe aus Tabakstäben und Filterabschnitt mit einem beleimten Belagblättchen verbunden wird. Die dem Filterabschnitt benachbarten Enden der Tabakstäbe sind in der Zeichnung mit 4, der mit dem Belagblättchen umwickelte Filterabschnitt ist mit 6 bezeichnet. Die Doppelzigarette 1 wird auf einer Fördertrommel 7 in den Fokusbereich von Optiken 8 und 9 zweier nicht weiter dargestellter Strahlungsköpfe 11 und 12 gefördert. Die Strahlungsköpfe 11 und 12 sind zu den Perforationszonen 2 und 3 hin ausgerichtet, so daß die Optiken 8 und 9 die empfangene Strahlung auf die Umhüllung der Zigarette 1 im Filterbereich 6 fokussieren. Mittels einer in der Zeichnung nicht dargestellten Gegenrollfläche werden die Zigaretten im Fokusbereich der Optiken 8 und 9 um 360° rückwärts gedreht, wobei sie bezüglich der Strahlungsköpfe 11 und 12 stillstehen. Auf diese Weise werden die Zigaretten mit ringförmigen Perforationsspuren oder Lochreihen 13 und 14 versehen. Eine die Zigaretten ortsfest drehende Fördereinrichtung ist beispielsweise in der US-PS 4 281 670 oder der US-PS 4 265 254 detailliert dargestellt und beschrieben. Auf diese Offenbarung wird hier ausdrücklich Bezug genommen.

Die in Figur 1 dargestellte Vorrichtung weist als Strahlungsquelle 16 zwei Pulslaser 17 und 18 auf, die je einen Laserstrahl 19 und 21 abgeben. Beide Laser sind mit einer Steueranordnung 22 verbunden, welche sie separat steuert, so daß die Pulsfolgen der Laser unabhängig voneinander eingestellt werden können. Strahlführungsmittel 23, die die Strahlen 19 und 21 mittels Umlenkspiegeln 24 bzw. 26 zweibahnig umlenken, führen beide Strahlen zu einem halbdurchlässigen Spiegel 27. Dieser halbdurchlässige Spiegel wirkt als Strahlteiler, der einen Teilstrahl jedes Strahles 19 und 21 zur Optik 9 des Strahlungskopfes 12 umlenkt und von jedem Strahl 19 und 21 einen Teilstrahl zu einem Umlenkspiegel 28 durchläßt, der diese Teilstrahlen zur Optik 8 des Strahlungskopfes 11 reflektiert. So führen die Strahlführungsmittel 23 die beiden separaten Strahlen 19 und 21 zu einem Doppelstrahl zusammen, der mit dem Strahlteiler 27 zunächst in zwei Doppelstrahlen aufgeteilt wird, von denen der eine durch die Optik 9 des Strahlungskopfes 12 auf die Perforationszone 14 und der andere über den Umlenkspiegel 28 und durch die Optik 8 des Strahlungskopfes 11 auf die Perforationszone 13 der Zigarette 1 fokussiert wird. Jeder Doppelstrahl erzeugt so zwei nebeneinanderverlaufende Perforationsspuren oder Lochreihen 13 bzw. 14. Da jeder Doppelstrahl einen Teilstrahl von beiden Laserstrahlungen 19 und 21 umfaßt, sind weitestgehend gleiche Perforationen in den beiden Perforationszonen der Zigarette zu erwarten.

Die Laser 17 und 18 sind mittels der Steueranordnung 22 separat steuerbar. Dadurch können beiden Lesern unterschiedliche Pulsfolgen vorgegeben werden, damit in den Perforationszonen 2 und 3 verschiedene Lochmuster bzw. Perforationsmuster entstehen. Beispiele solcher Perforationsmuster sind in der Figur 3 gezeigt, in der gleiche Teile mit denselben Bezugszeichen versehen sind wie in Figur 1 und nicht noch einmal beschrieben werden. In Figur 3a sind die Lochreihen bzw. Perforationsspuren 14a und 14b bzw. 13a und 13b in Umfangsrichtung zueinander versetzt. Dieses Perforationsmuster entsteht dadurch, daß die Laser im gleichen Zeittakt, aber abwechselnd gepulst werden. Bei dem Lochmuster nach Figur 3b liegen die Lochreihen exakt nebeneinander. Dies Lochmuster entsteht dadurch, daß die Laser synchron gepulst werden. Um das in Figur 3c gezeigte Lochmuster zu erzeugen, werden die Laser 17 und 18 abwechselnd zweimal hintereinander gepulst. Durch die Einstellung der Pulsfolgen der Laser 17 und 18 lassen sich auf diese Weise sehr viele Perforationsmuster-Varianten erzeugen. Außerdem kann durch die Einstellung der Anzahl der Löcher in jeder Lochreihe einzeln ein sehr feinfühliger Einfluß auf die gesamte Luftdurchlässigkeit der Perforationszone genommen werden.

In Figur 2 ist ein weiteres Ausführungs- und Anwendungsbeispiel der Erfindung schematisch dargestellt. In diesem Fall weist die Strahlungsquelle 16 wieder zwei Laser 29 und 31 auf, deren Strahlen 32 und 33 zunächst jeweils mittels eines Strahlteilers 34 bzw. 36 in Teilstrahlen 32a, 32b, 33a, 33b aufgesplittet werden. Diese Teilstrahlen werden über Spiegel 24 bzw. 26 der Strahlführungsmittal 23 umgelenkt und in Perforierstationen 37 und 38 geführt. Die beiden Perforierstationen 37 und 38 sind zwei verschiedenen Förderwegen bzw. Förderwegabschnitten der stabförmigen Artikel zugeordnet und weisen Strahlteiler, Umlenkspiegel, Strahlungsköpfe und Optiken auf, wie sie im Zusammenhang mit der Figur 1 beschrieben sind. Dies ermöglicht das Perforieren von Zigaretten 1, 1a gleichzeitig auf zwei Förderern 7, 7a in zwei verschiedenen Förderwegen, was eine beträchtliche Leistungserhöhung ermöglicht oder bei gleicher Leistung eine verringerte Fördergeschwindigkeit und eine Verringerung der Beanspruchung der Artikel beim Rollen bedeutet. Der Rollvorgang auf jeder Trommel 7, 7a ist derselbe wie der im Zusammenhang mit Figur 1 beschriebene. Die Laser 29 und 31 der Strahlungsquelle 16 können wie im Beispiel der Figur 1 Pulslaser sein, die unabhängig voneinander gesteuert werden. Für das Ausführungsbeispiel der Figur 2 sind Jedoch Dauerstrichlaser vorgesehen, deren Strahlen 32 und 33 mittels umlaufender Shutterscheiben 39 und 41 unterbrochen und damit gepulst sind. Die Shutterscheiben sind von Antrieben 42 und 43 angetrieben, die von einer Steueranordnung 44 unabhängig voneinander gesteuert werden können. Wegen der besseren Übersichtlichkeit ist die Steueranordnung 44 in Figur 2 zweimal dargestellt. Durch entsprechende Steuerung der Shutterscheiben 39 und 41 können wie mit separat gesteuerten Pulslasern in den Perforationszonen die unterschiedlichsten Perforationsmuster erzeugt werden. Auch andere Steuergrößen, wie z.B. die Pulslänge, können wie bei den separat gesteuerten Pulslasern auch mit den Shutterscheiben 39 und 41 individuell eingestellt werden. Die Vorrichtung erlaubt also auch in modernen schnellaufenden Hochleistungsmaschinen eine zuverlässige und variable Perforation des Hüllmaterials der hergestellten Artikel.

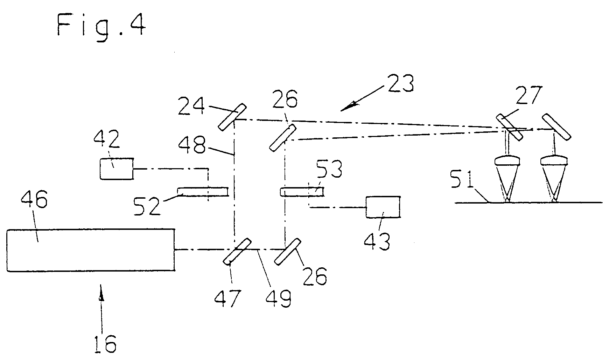

Bei dem in Figur 4 schematisch gezeigten Ausführungsbeispiel der Erfindung besteht die Strahlungsquelle 16 aus einem einzigen Laser 46 und einem Strahlteiler 47, so daß auch hier die Strahlungsquelle 16 zwei Strahlen 48 und 49 abgibt. Die Strahlführungsmittel 23 mit Umlenkspiegeln 24 und 26 stimmt im wesentlichen mit den im Zusammenhang mit Figur 1 beschriebenen überein. Diese Strahlführungsmittel 23 führen die Strahlen 48 und 49 zu einem Doppelstrahl zusammen, der wie in Figur 1 beschrieben über einen Strahlteiler 27 in zwei Doppelstrahlen aufgesplittet wird. Die Führung der Doppelstrahlen in zwei Strahlungsköpfe, deren Optiken Sie auf das zu perforierende Objekt fokussieren, stimmt mit der in Figur 1 überein und braucht hier nicht erneut beschrieben zu werden. Das mit Zonen gewünschter Luftdurchlässigkeit zu versehende Objekt ist im Falle der Figur 4 eine Materialbahn 51, beispielsweise ein in Längsrichtung bewegter Belagpapierstreifen, in welchen mit den beiden Doppelstrahlen in zwei Perforationszonen jeweils zwei Perforationsspuren bzw. Lochreihen eingebracht werden.

48 und 49 umlaufende Shutterscheiben 52 bzw. 53 zugeordnet, die von Antrieben 42 bzw. 43 angetrieben und getrennt steuerbar sind.

Die Vorrichtung nach der Figur 4 kann wie auch die Vorrichtung nach den Figuren 1 und 2 in eine Filteransetzmaschine integriert sein, wie das in der obenerwähnten DE 27 54 104 C2 (≙ US 4 265 254) beispielsweise beschrieben ist. Ist bin Materialstreifen, beispielsweise ein Belagpapierstreifen 51 zu perforieren, so kann eine Vorrichtung nach den Figuren 1, 2 oder 4 auch einer separaten Perforiereinrichtung für derartige Belagstreifen zugeordnet sein.

Es sei darauf hingewiesen, daß die Vorrichtungen nach den Figuran 1 und 2 auch für das Perforieren von Materialstreifen und die Vorrichtung nach Figur 4 auch für das Perforieren der Umhüllung von fertigen Zigaretten benutzt werden kann.

## Patentansprüche

1. Vorrichtung zum Herstellen von Zonen gewünschter Luftdurchlässigkeit im Hüllmaterial stabförmiger Artikel der tabakverarbeitenden Industrie mit einer Strahlungsquelle zum Erzeugen einer Strahlung zum Perforieren des Hüllmaterials, einem zum Hüllmaterial ausgerichteten Strahlungskopf mit einer Optik zum Fokussieren der Strahlung auf das Hüllmaterial und Strahlführungsmitteln zum Führen der Strahlung von der Strahlungsquelle zum Strahlungskopf, dadurch gekennzeichnet, daß die Strahlungsquelle (16) wenigstens zwei Strahlen (19,21,32,33,48,49) abgebend ausgebildet ist und daß die Strahlführungsmittel (23) und der Strahlungskopf (11,12) die Strahlen in einer gemeinsamen Perforationszone (2,3) zu einem Mehrfachstrahl zusammenführend ausgebildet sind.

2. Vorrichtung nach Anspruch 1, dadurch gekennzeichnet, daß der Strahlungskopf (11,12) für die Strahlen des Mehrfachstrahls eine gemeinsame Optik (8,9) aufweist, welche die Strahlen in der Perforationszone (2,3) auf nebeneinanderverlaufende Perforationsspuren (13a,13b,14a,14b) fokussiert.

3. Vorrichtung nach Anspruch 1 oder 2, dadurch gekennzeichnet, daß wenigstens zwei zu je einer Perforationszone (2,3) hin ausgerichtete Strahlungsköpfe (11,12) vorgesehen sind, daß die Strahlführungsmittel (23) Strahlteiler (27) zum Aufteilen der Strahlen (19,21,32,33,48,49) der Strahlungsquelle (16) in mehrere Teilstrahlen aufweisen und die Teilstrahlen zu den Strahlungsköpfen (11,12) führend und zu Mehrfachstrahlen aus Teilstrahlen der Strahlen der Strahlungsquelle vereinend ausgebildet und angeordnet sind und daß die Optik (8,9) jedes Strahlungskopfes (11,12) einen solchen Mehrfachstrahl in die jeweils zugehörige Perforationszone (2,3) fokussiert.

4. Vorrichtung nach einem der Ansprüche 1 bis 3, dadurch gekennzeichnet, daß die Strahlführungsmittel (23) wenigstens abschnittsweise mehrbahnig ausgebildet sind.

5. Vorrichtung nach einem der Ansprüche 1 bis 4, dadurch gekennzeichnet, daß die Strahlführungsmittel (23) gemeinsame Strahlteiler (27) zum Aufteilen der Strahlen der Strahlungsquelle in mehrere Mehrfachstrahlen aufweisen

6. Vorrichtung nach einem der Ansprüche 1 bis 5, dadurch gekennzeichnet, daß die Strahlungsquelle (16) wenigstens zwei separat steuerbare Pulslaser (17,18) zum Abgeben wenigstens zweier gepulster Laserstrahlen (19,21) aufweist.

7. Vorrichtung nach einem der Ansprüche 1 bis 5, dadurch gekennzeichnet, daß die Strahlungsquelle (16) wenigstens zwei Dauerstrichlaser (29,31) zum kontinuierlichen Abgeben wenigstens zweier Laserstrahlen (32,33) aufweist und daß jedem Laserstrahl Pulserzeugungsmittel (39,41) zum Pulsen des Laserstrahls zugeordnet sind.

8. Vorrichtung nach einem der Ansprüche 1 bis 5, dadurch gekennzeichnet, daß die Strahlungsquelle (16) einen Laser (46) mit einem Strahlteiler (47) zum Aufteilen der Laserstrahlung in wenigstens zwei Strahlen (48,49) aufweist.

9. Vorrichtung nach Anspruch 8, dadurch gekennzeichnet, daß als Laser (46) ein Dauerstrichlaser vorgesehen ist.

10. Vorrichtung nach Anspruch 8 oder 9, dadurch gekennzeichnet, daß den Strahlengängen (48,49) separat steuerbare Pulserzeugungsmittel (52,53) zum Pulsen der Strahlen zugeordnet sind.

11. Vorrichtung nach Anspruch 10, dadurch gekennzeichnet, daß den Strahlengängen (48,49) als Pulserzeugungsmittel Shutterscheiben (52,53) mit separat steuerbaren Antrieben (42,43) zugeordnet sind.

12. Vorrichtung nach einem der Ansprüche 1 bis 11, dadurch gekennzeichnet, daß sie zum Perforieren der Umhüllung queraxial geförderter Zigaretten (1) oder eines Belagpapierstreifens (51) in eine Filteransetzmaschine integriert ist.

13. Vorrichtung nach einem der Ansprüche 1 bis 12, dadurch gekennzeichnet, daß wenigstens zwei Strahlungsköpfe (11,12) auf Perforationszonen (2,3) in unterschiedlichen Förderwegen oder Förderwegabschnitten der zu perforierenden Artikel (1) ausgerichtet sind.
